# EUROPÄISCHE PATENTSCHRIFT

(11) **EP 1 066 905 B1**
(45) Veröffentlichungstag und Bekanntmachung des Hinweises auf die Patenterteilung: **26.07.2006**
(21) Anmeldenummer: 00112200.1
(22) Anmeldetag: 07.06.2000
(51) Int. Cl.: B23D 51/02, B23D 49/16

(54) **Stichsäge mit Sägeblattführungvorrichtung**
Sabre saw with saw blade guide
Scie auteuse à dispositif de guidage de la lame de scie

(30) Priorität: 08.07.1999 DE 19931732
(43) Veröffentlichungstag der Anmeldung: 10.01.2001
(73) Patentinhaber: TTS Tooltechnic Systems AG & Co. KG, 73240 Wendlingen (DE)
(72) Erfinder: Tulodziecki, Stefan, Dipl.-Ing., 73765 Neuhausen (DE)
(74) Vertreter: Reimold, Otto

(56) Entgegenhaltungen:
- DE-A- 4 121 989
- DE-A- 19 513 078

## Beschreibung

Die Erfindung betrifft eine Stichsäge gemäß dem Oberbegriff des Anspruchs 1.

Eine solche Stichsäge ist aus der DE 41 21 989 A1 bekannt. Dabei wird durch die beiden Stabilisierungselemente eine seitliche Führung des ansonsten nur mit seinem oberen Ende befestigten Sägeblattes erreicht. Sägeblätter können jedoch eine unterschiedliche Dicke aufweisen. Damit man bei beliebiger Sägeblattdicke eine seitliche Führung durch die Stabilisierungselemente erhält, kann der Abstand der beiden Tragarme und somit der beiden Stabilisierungselemente voneinander mit Hilfe der Verstellschraube verstellt werden. Dabei sind bei der bekannten Stichsäge die beiden Tragarme elastisch flexibel ausgebildet, so daß sie sich je nachdem, in welche Richtung man die Verstellschraube verdreht, in gleichem Ausmaß aufeinander zu oder voneinander weg bewegen. Auf diese Weise ist die Mitte des Sägeblattes unabhängig von der Sägeblattdicke stets an der gleichen Stelle angeordnet. Dementsprechend befinden sich die beiden Sägeblattseiten bei unterschiedlich dicken Sägeblättern in anderen Ebenen. Hierdurch verändert sich die Lage der Schnittkante am Werkstück. Ferner kann es zu einem leichten Verbiegen des am Sägeblatthalter fest eingespannten Sägeblattes kommen.

Die vorliegende Erfindung will hier Abhilfe schaffen und sieht dazu vor, daß einer der Tragarme biegesteif und der andere Tragarm im Bereich hinter der Verstellschraube elastisch flexibel ausgebildet ist, so daß sich beim Anpassen des Abstandes zwischen den Stabilisierungselementen an die Sägeblattdicke mittels der Verstellschraube zumindest im wesentlichen nur der flexible Tragarm elastisch verbiegt. Weitere vorteilhafte Ausführungsformen sind den abhängigen Ansprüchen 2 bis 5 zu entnehmen.

Bei der erfindungsgemäßen Stichsäge bleibt also, setzt man ein Sägeblatt anderer Dicke ein, nicht die Sägeblattmitte sondern die dem biegesteifen Tragarm zugewandte Sägeblattseite am gleichen Ort, so daß sich die mit dieser Sägeblattseite zusammenfallende Schnittkante des Werkstücks immer an der gleichen Stelle befindet.

Außerdem kann insbesondere dann kein Verbiegen des Sägeblattes auftreten, wenn der Sägeblatthalter eine der gleichen Sägeblattseite wie das Stabilisierungselement des biegesteifen Tragarms zugeordnete Anlagefläche enthält, gegen die das jeweils befestigte Sägeblatt gehalten wird.

Mit der erfindungsgemäßen Ausbildung der beiden Tragarme sind praktisch keine Mehrkosten verbunden, so daß es sich um eine einfache und billige Lösung handelt.

Ein Ausführungsbeispiel der Erfindung wird nun anhand der Zeichnung erläutert. Es zeigen:

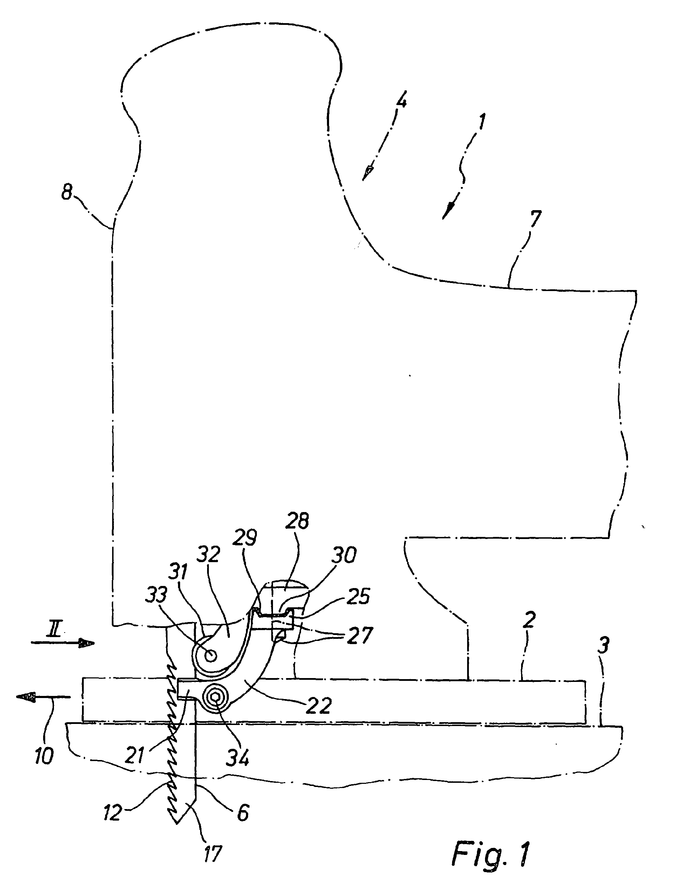

- Fig. 1: eine erfindungsgemäße Stichsäge in schematischer Seitenansicht, wobei lediglich der die Stabilisierungselemente enthaltende Bereich mit ausgezogenen Linien dargestellt ist, während der Umriß der Stichsäge ansonsten strichpunktiert angedeutet ist,
- Fig. 2: die Anordnung nach Fig. 1 in Vorderansicht gemäß Pfeil II, wobei die Stützrolle und die Antriebseinheit mit Ausnahme des nur schematisch angedeuteten Sägeblatthalters weggelassen worden sind,

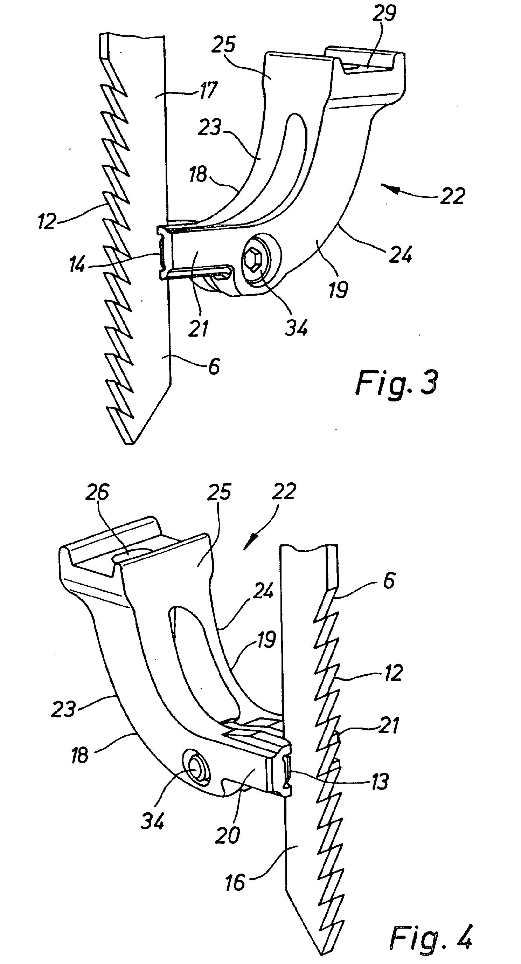

- Fig. 3: das Sägeblatt und das die beiden Tragarme für die Stabilisierungselemente bildende Haltestück in gesonderter Darstellung in Schrägansicht und
- Fig. 4: die Anordnung nach Fig. 3 in Schrägansicht von der entgegengesetzten Seite her gesehen.

Die Stichsäge 1 weist einen strichpunktiert angedeuteten Sägetisch 2 auf, der mit seiner Unterseite auf das zu sägende Werkstück 3 aufgelegt wird. Die Stichsäge 1 besitzt ferner oberhalb des Sägetisches 2 eine Antriebseinheit 4, die in üblicher Weise einen Antriebsmotor und ein Getriebe enthält, über das beim Betrieb ein Sägeblatthalter 5 zu einer periodischen Auf- und Abbewegung angetrieben wird. Der Sägeblatthalter 5 dient zum auswechselbaren Befestigen eines die Auf- und Abbewegung mitmachenden und den Sägevorgang ausführenden Sägeblattes 6.

Der Antriebsmotor kann beispielsweise ein elektrischer Stabmotor sein, der in einem länglichen, gleichzeitig als Handgriff zum Halten der Stichsäge ausgebildeten Gehäuseteil 7 untergebracht ist, das sich oberhalb des Sägetisches 2 mit Abstand zum Werkstück 3 nach hinten über den Sägetisch 2 hinaus erstreckt. Das Getriebe befindet sich in einem vorderen Gehäuseteil 8, das oben eine knaufähnliche Verlängerung zum Ergreifen mit der anderen Hand besitzt.

Das Sägeblatt 6 ist am vorderen Endbereich der Stichsäge angeordnet und wird mit seinem oberen Ende von dem Sägeblatthalter 5 gehalten. Das Sägeblatt 6 erstreckt sich von der Antriebseinheit 4 in Seitenansicht gesehen im wesentlichen rechtwinkelig zum Sägetisch 2 nach unten bis unterhalb des Sägetisches 2, der im Bereich des Sägeblattes 6 eine nach vorne hin offene Ausnehmung 9 für den Durchtritt des Sägeblattes 6 enthält. Schiebt man die Stichsäge 1 über das betreffende Werkstück 3 in Vorschubrichtung 10 nach vorne, sägt das auf und ab (Doppelpfeil 11) gehende Sägeblatt 6 mit seiner an der Sägeblatt-Vorderseite 12 angebrachten Sägezahnreihe einen Schlitz in das Werkstück 3.

Die Antriebseinheit 4 ist auf den Sägetisch 2 aufgesetzt und dabei um die Vorschubrichtung 10 verschwenkbar und in der jeweiligen Schwenkstellung feststellbar. Die Antriebseinheit und mit dieser das Sägeblatt 6 kann somit nach der einen oder anderen Seite hin verschwenkt werden, so daß das Sägeblatt 6 schräg zum Werkstück 3 ausgerichtet ist und an diesem einen entsprechenden Schrägschnitt, beispielsweise einen Gehrungsschnitt, anbringt.

Um zu vermeiden, daß das mit seinem oberen Ende befestigte Sägeblatt 6 aufgrund der beim Sägevorgang vom Werkstück ausgeübten Kräfte seitlich ausweicht, sind zur seitlichen Führung des Sägeblattes 6 zwei etwa in Höhe des Sägetisches 2 angeordnete Stabilisierungselemente 13,14 vorhanden, die in Querrichtung 15, d.h. rechtwinkelig zur Vorschubrichtung 10, einen der Sägeblattdicke entsprechenden Abstand zueinander aufweisen, der an die Dicke des jeweils verwendeten Sägeblattes angepaßt werden kann, so daß die Stabilisierungselemente 13,14 an den seitlichen Flachseiten 16,17 des Sägeblattes 6 anliegen. Die somit beiderseits des Sägeblattes 6 angeordneten, jeweils einer Sägeblattseite 16 bzw. 17 zugeordneten Stabilisierungselemente 13,14 können plättchenförmige Gestalt aufweisen und bestehen aus einem thermisch hochbelastbaren, verschleißarmen Material, wobei insbesodnere Hartmetall, jedoch auch ein Keramikmaterial wie Oxidkeramik geeignet ist.

Die beiden Stabilisierungselemente 13,14 sind jeweils am Endbereich 20 bzw. 21 eines der jeweiligen Sägeblatt-Flachseite zugewandten Tragarms 18 bzw. 19 angeordnet, der fest mit dem Gehäuse der Antriebseinheit 4 verbunden ist.

Die beiden Tragarme 18,19 erstrecken sich mit Abstand zueinander von hinter dem Sägeblatt 6 nach vorne seitlich neben die jeweilige Sägeblattseite 16 bzw. 17 zu den an ihren Endbereichen angebrachten Stabilisierungselementen.

Die beiden Tragarme 18,19 können prinzipiell voneinander gesonderte Teile und jeweils für sich fest mit der Antriebseinheit verbunden sein. Zweckmäßigerweise werden die beiden Tragarme 18,19 von einem gabelartigen Haltestück 22 gebildet, dessen Gabelschenkel 23,24 die beiden Tragarme 18,19 darstellen. Dabei sind die beiden Gabelschenkel 23,24 bzw. die beiden Tragarme 18,19 über eine den Stabilisierungselementen 13,14 entgegengesetzte Basispartie 25 des Haltestücks 22 miteinander verbunden. Das Haltestück 22 ist einstückig ausgebildet. Es ist ferner über seine Basispartie 25 fest mit dem Gehäuse der Antriebseinheit 4 verbunden. Hierzu kann die Basispartie 25 im Bereich zwischen den beiden Gabelschenkeln 23,24 eine Durchtrittsausnehmung 26 enthalten, durch die eine Befestigungsschraube 27 greift, die in ein Gehäuseteil 28 der Antriebseinheit 4 eingeschraubt ist. Die Basispartie 25 bildet an ihrer den Tragarmen 18,19 entgegengesetzten Seite eine prismatische Querausnehmung 29, mit der sie auf einen Lagervorsprung 30 entsprechenden Querschnitts des Gehäuseteils 28 aufgesetzt ist. Die Durchtrittsausnehmung 26 kann in Querrichtung 15 längliche Gestalt aufweisen, so daß das Haltestück 22 in Querrichtung 15 exakt justiert angebracht werden kann.

Beim Ausführungsbeispiel erstrecken sich die beiden Tragarme 18, 19 hinter dem Sägeblatt 6 von der Antriebseinheit 4 nach unten und verlaufen dann nach vorne zu den Sägeblatt-Flachseiten 16, 17, wo sie die Stabilisierungselemente 13,14 tragen. Dabei verlaufen die Tragarme 18,19 hinten und unten um eine Stützrolle 31 herum, die der Sägeblatt-Rückseite zugeordnet ist und das Sägeblatt 6 rückseitig abstützt. Die Stützrolle 20 sitzt an einem hinter dem Sägeblatt 6 angeordneten Stützrollenhalter 32, der zwei Lagerschenkel aufweist, zwischen denen die Stützrolle 31 auf einer Rollenachse 33 angeordnet ist. Zweckmäßigerweise führt der Stützrollenhalter 32 synchron zur Auf- und Abbewegung des Sägeblattes 6 eine Pendelbewegung um eine zur Querrichtung 15 parallele Pendelachse aus, so daß die Stützrolle 31 pendelnd auf die Sägeblatt-Rückseite einwirkt und das Sägeblatt 6 eine pendelnde Hubbewegung ausführt. Dies ist eine bei Stichsägen übliche Maßnahme.

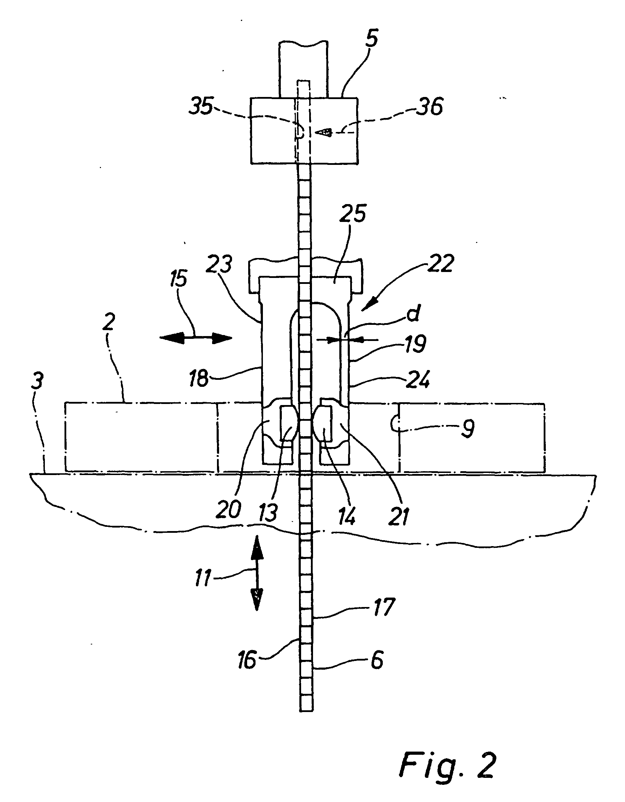

Die von den beiden Tragarmen 18,19 gebildete Anordnung ist in Vorderansicht (Fig. 2) möglichst schmal ausgebildet, so daß sie, ohne das seitliche Verschwenken der Antriebseinheit 4 relativ zum Sägetisch 2 zu behindern, möglichst weit unten und somit nahe am Werkstück 3 angeordnet werden kann.

Sägeblätter können eine unterschiedliche Dicke aufweisen. Damit man bei jeder Sägeblattdicke eine exakte seitliche Führung erhält, kann der Abstand der beiden Tragarme 18,19 und somit der beiden Stabilisierungselemente 13,14 voneinander verstellt und an die jeweilige Sägeblattdicke angepaßt werden. Hierzu sind die beiden Tragarme 18,19 im Bereich hinter dem Sägeblatt 6 über eine den Abstand zwischen den Tragarmen durchquerende und somit in Querrichtung 15 verlaufende Verstellschraube 34 miteinander verbunden. Dabei kann die Verstellschraube 34 durch eine Steckbohrung beispielsweise des Tragarms 19 gesteckt und in eine fluchtende Gewindebohrung des entgegengesetzten Tragarms 18 eingeschraubt sein. Der Kopf der Verstellschraube 34 stützt sich an einer nach außen weisenden Fläche des Tragarms 19 ab. Durch Verdrehen der Verstellschraube 34 im Sinne eines Einschraubens in die Gewindebohrung des Tragarms 18 wird der Abstand zwischen den beiden Stabilisierungselementen 13,14 verringert. Verdreht man die Verstellschraube 34 in entgegengesetzter Richtung, vergrößert sich dieser Abstand.

In diesem Zusammenhang ist ferner vorgesehen, daß einer der Tragarme, beim Ausführungsbeispiel der Tragarm 18, biegesteif und der andere Tragarm 19 im Bereich hinter der Verstellschraube 34 elastisch flexibel ausgebildet ist, so daß sich beim Anpassen des Abstandes zwischen den Stabilisierungselementen 13,14 an die Sägeblattdicke mittels der Verstellschraube 34 zumindest im wesentlichen nur der flexible Tragarm 19 elastisch verbiegt. Beim Verdrehen der Verstellschraube 34 bleibt somit der biegesteife Tragarm 18 unverändert stehen, während sich der elastisch flexible Tragarm 19 verbiegt. Dabei ist der Tragarm 19 eigenelastisch ausgebildet, so daß sich der Abstand zwischen den Stabilisierungselementen beim Herausdrehen der Verstellschraube aus dem Tragarm 18 selbsttätig vergrößert. Der in sich biegesteife Tragarm 18 ist außerdem feststehend starr und biegesteif mit der Basispartie 25 des Haltestücks 22 verbunden.

Auf diese Weise befindet sich die dem biegesteifen Tragarm 18 zugewandte Sägeblattseite 16 unabhängig von der Dicke des jeweils verwendeten Sägeblattes stets in der gleichen Ebene.

Wie bereits erwähnt, wird das obere Ende des Sägeblattes 6 von dem Sägeblatthalter 5 auswechselbar gehalten. Dabei enthält der Sägeblatthalter 5 eine feststehende Anlagefläche 35, an der das jeweils eingesetzte Sägeblatt 6 mit seiner einen Flachseite 16 anliegt. Das Sägeblatt 6 kann mit Hilfe einer auf die entgegengesetzte Sägeblatt-Flachseite 17 einwirkenden Spanneinrichtung gegen die Anlagefläche 35 gedrückt werden. Die Spanneinrichtung ist in Fig. 2 symbolisch durch den Kraftpfeil 36 angedeutet. Bei der an der Anlagefläche 35 anliegenden Sägeblattseite 16 handelt es sich um die gleiche Seite, die an dem Stabilisierungselement 13 des biegesteifen Tragarms 18 anliegt. Dabei sind die Anlagefläche 35 und die am Sägeblatt 6 anliegende Fläche des Stabilisierungselements 13 des biegesteifen Tragarms 18 fluchtend zueinander, d.h. in einer gleichen Ebene angeordnet.

Der elastisch flexible Tragarm 19 weist hinter der Verstellschraube 34 mindestens teilweise eine sein elastisches Verbiegen ermöglichende, mit Bezug auf den biegesteifen Tragarm 18 kleinere Tragarmdicke d auf. Beim Ausführungsbeispiel ist der Tragarm 19, sieht man von abgerundeten Übergangsbereichen ab, von der Basispartie 25 aus bis zum das Stabilisierungselement 14 tragenden und die Verstellschraube 34 lagernden Endbereich 21 entsprechend dünnwandig ausgebildet.

## Patentansprüche

1. Stichsäge (1) mit einem auf das zu sägende Werkstück aufzulegenden Sägetisch (2), einer auf den Sägetisch (2), insbesondere verschwenkbar, aufgesetzten Antriebseinheit (4), die einen zu einer periodischen Auf-und Abbewegung antreibbaren Sägeblatthalter (5) zum auswechselbaren Befestigen eines vom Sägeblatthalter (5) nach unten bis unterhalb des Sägetisches (2) abstehenden Sägeblattes (6), enthält, und mit zwei etwa in Höhe des Sägetisches (2) beiderseits des Sägeblattes (6) angeordneten, jeweils einer Sägeblattseite (16,17) zugeordneten Stabilisierungselementen (13,14) zur seitlichen Führung des Sägeblattes (6), die jeweils an einem mit dem Gehäuse (7,8) der Antriebseinheit (4) verbundenen Tragarm (18,19) angeordnet sind, wobei die beiden Tragarme (18,19) sich mit Abstand zueinander von hinter dem Sägeblatt (6) nach vorne seitlich neben die jeweilige Sägeblattseite (16,17) zu den Stabilisierungselementen (13,14) erstrecken und im Bereich hinter dem Sägeblatt (6) über eine den Abstand zwischen den Tragarmen (18,19) durchquerende Verstellschraube (34) zum Anpassen des Abstandes zwischen den Stabilisierungselementen (13,14) an die Sägeblattdicke miteinander verbunden sind, **dadurch gekennzeichnet, daß** einer (18) der Tragarme biegesteif und der andere Tragarm (19) im Bereich hinter der Verstellschraube (34) elastisch flexibel ausgebildet ist, so daß sich beim Anpassen des Abstandes zwischen den Stabilisierungselementen (13,14) an die Sägeblattdicke mittels der Verstellschraube (34) zumindest im wesentlichen nur der flexible Tragarm (19) elastisch verbiegt.

2. Stichsäge nach Anspruch 1, **dadurch gekennzeichnet, daß** der Sägeblatthalter (5) eine der gleichen Sägeblattseite (16) wie das Stabilisierungselement (13) des biegesteifen Tragarms (18) zugeordnete Anlagefläche (35) enthält, gegen die das jeweils befestigte Sägeblatt (6) gehalten wird.

3. Stichsäge nach Anspruch 1 oder 2, **dadurch gekennzeichnet, daß** der elastisch flexible Tragarm (19) hinter der Verstellschraube (34) mindestens teilweise eine sein elastisches Verbiegen ermöglichende, mit Bezug auf den biegesteifen Tragarm (18) kleinere Tragarmdicke (d) aufweist.

4. Stichsäge nach einem der Ansprüche 1 bis 3, **dadurch gekennzeichnet, daß** die beiden Tragarme (18,19) von den Gabelschenkeln (23,24) eines gabelartigen Haltestücks (22) gebildet werden, dessen die beiden Gabelschenkel verbindende Basispartie (25) am Gehäuse der Antriebseinheit (4) befestigt ist.

5. Stichsäge nach einem der Ansprüche 1 bis 4, **dadurch gekennzeichnet, daß** sich die beiden Tragarme (18,19) hinter dem Sägeblatt (6) von der Antriebseinheit (4) nach unten, zweckmäßigerweise unter Herumführen um eine gegebenenfalls vorhandene, der Sägeblatt-Rückseite zugeordnete Stützrolle (31), nach vorne zu den Sägeblattseiten (16,17) erstrecken.

## Claims

1. Compass saw (1) with a saw bench (2) to be placed upon the workpiece to be sawn, a drive unit (4), in particular capable of swivelling, placed on the saw bench (2) and containing a saw blade holder (5) which may be driven to perform a periodic up-and-down movement for the interchangeable attachment of a saw blade (6) extending downwards from the saw blade holder (5) to below the saw bench (2), and with two stabilising elements (13, 14) for lateral guidance of the saw blade (6), arranged either side of the saw blade (6) at roughly the height of the saw bench (2) and each mounted on a support arm (18, 19) connected to the housing (7, 8) of the drive unit (4), wherein the two support arms (18, 19) extend forwards with clearance from one another alongside the respective saw blade side (16, 17) from behind the saw blade (6) to the stabilising elements (13, 14) and are connected to one another in the area behind the saw blade (6) via an adjusting screw (34) which passes through the space between the support arms (18, 19) and serves to adjust the clearance between the stabilising elements (13, 14), **characterised in that** one (18) of the support arms is rigid and the other support arm (19) is elastically flexible in the area behind the adjusting screw (34), so that in matching the clearance between the stabilising elements (13, 14) to the saw blade thickness by means of the adjusting screw (34), at least substantially only the flexible support arm (19) bends elastically.

2. Compass saw according to claim 1, **characterised in that** the saw blade holder (5) has a locating surface (35), assigned to the same saw blade side (16) as the stabilising elements (13) of the rigid support arm (18), against which the respectively fastened saw blade (6) is held.

3. Compass saw according to claim 1 or 2, **characterised in that** the elastically flexible support arm (19) has behind the adjusting screw (34) at least in part a smaller support arm thickness (d) than the rigid support arm (18), to permit its elastic bending.

4. Compass saw according to any of claims 1 to 3, **characterised in that** the two support arms (18, 19) are formed by the fork prongs (23, 24) of a fork-like retaining element (22), which has a base section (25) joining the two fork prongs and fixed to the housing of the drive unit (4).

5. Compass saw according to any of claims 1 to 4, **characterised in that** the two support arms (18, 19) extend behind the saw blade (6) downwards from the drive unit (4) and forward towards the saw blade sides (16, 17), expediently with guidance around a support roller (31), provided as necessary and assigned to the saw blade rear.

## Revendications

1. Scie sauteuse (1) avec une table de scie (2) destinée à être posée sur la pièce à scier, une unité d'entraînement (4) posée notamment de façon à pouvoir pivoter sur la table de scie (2), contenant un porte-lame de scie (5) pouvant être entraîné en un mouvement ascendant et descendant périodique, pour la fixation interchangeable d'une lame de scie (6) dépassant vers le bas du porte-lame de scie (5), jusque sous la table de scie (2), et avec deux éléments de stabilisation (13,14), chacun associé à un côté de la lame de scie (16, 17) disposés approximativement à hauteur de la table de scie (2), des deux côtés de la lame de scie (6), pour le guidage latéral de la lame de scie (6), qui sont chacun disposés sur un bras support (18, 19) relié au carter de l'unité d'entraînement (4), les deux bras supports (18, 19) s'étendant à distance mutuelle de l'arrière de la lame de scie (6) vers l'avant, latéralement près du côté respectif de la lame de scie (16, 17) vers les éléments de stabilisation (13, 14) et dans la zone derrière la lame de scie (6) étant reliés entre eux par l'intermédiaire d'une vis de réglage (34) traversant la distance entre les bras support (18, 19), pour l'adaptation de la distance entre les éléments de stabilisation (13, 14) à l'épaisseur de la lame de scie, **caractérisée en ce que** l'un (18) des bras support est résistant à la flexion et l'autre bras support (17) est conçu de façon flexible et élastique dans la région derrière la vis de réglage (34), pour que lors de l'adaptation de la distance entre les éléments de stabilisation (13, 14) à l'épaisseur de la lame de scie au moyen de la vis de réglage (34) au moins sensiblement seul le bras support flexible (19) se déforme de façon élastique.

2. Scie sauteuse selon la revendication 1, **caractérisée en ce que** le porte-lame de scie (5) comprend une surface d'appui (35) associée au même côté de la lame de scie (16) que l'élément de stabilisation (13) du bras support résistant à la flexion (18), contre laquelle la lame de scie (6) respectivement fixée est maintenue.

3. Scie sauteuse selon la revendication 1 ou 2, **caractérisée en ce que** le bras support flexible élastique (19) présente derrière la vis de réglage (34) une épaisseur de bras réduite (d) par rapport au bras support rigide à la flexion, permettant au moins partiellement sa déformation élastique.

4. Scie sauteuse selon l'une quelconque des revendications 1 à 3, **caractérisée en ce que** les deux bras supports (18, 19) sont formés par les branches de fourche (23, 24) d'une pièce de maintien fourchue (22), dont la partie de base (25) reliant les deux branches de fourche est fixée sur la carter de l'unité d'entraînement (4).

5. Scie sauteuse selon l'une quelconque des revendications 1 à 4, **caractérisé en ce que** les deux bras supports (18, 19) s'étendent derrière la lame de scie (6) de l'unité d'entraînement (4) vers le bas, opportunément en contournant un galet d'appui (31) éventuellement présent et associé à la face arrière de la lame de scie, vers l'avant en direction des côtés de la lame de scie (16, 17).
